# EUROPÄISCHE PATENTSCHRIFT

(11) **EP 2 517 936 B1**
(45) Veröffentlichungstag und Bekanntmachung des Hinweises auf die Patenterteilung: **21.09.2016**
(21) Anmeldenummer: 12400001.9
(22) Anmeldetag: 18.01.2012
(51) Int. Cl.: B60T 7/04, B60T 7/08, B60T 8/32, B60T 8/34, B60T 13/66, B60T 13/74, B60W 30/14, B60W 50/08, B60W 30/16, B60T 8/1755, B60T 7/12, B60T 7/22, B60W 10/02, B60W 10/18, B60W 30/18, B60W 30/182, B60W 50/00

(54) **Kraftfahrzeug umfassend ein Fahrerassistenzsystem**
Motor vehicle comprising a driver assistance system
Véhicule automobile comprenant un système d'assistance au conducteur

(30) Priorität: 26.04.2011 DE 102011018580
(43) Veröffentlichungstag der Anmeldung: 31.10.2012
(73) Patentinhaber: Audi AG, 85045 Ingolstadt (DE)
(72) Erfinder: Breu, Alexander, 93495 Weiding (DE)
(74) Vertreter: Thielmann, Frank

(56) Entgegenhaltungen:
- EP-A1- 2 116 439
- EP-A2- 1 442 915
- EP-A2- 1 867 853
- DE-A1- 10 006 682
- DE-A1- 10 052 816
- DE-A1- 10 105 749
- DE-A1-102008 027 120

## Beschreibung

Die Erfindung betrifft ein Kraftfahrzeug umfassend ein Fahrerassistenzsystem.

Fahrerassistenzsysteme kommen bei modernen Kraftfahrzeugen in vielerlei Ausprägungen zum Einsatz. Bekannt sind hierunter beispielsweise Längsführungssysteme wie das so genannte ACC-System (ACC = adaptive cruise control), das bei einer Freifahrt, also einer Fahrt ohne vorausfahrendem Fahrzeug, das Fahrzeug auf eine vom Fahrer voreinstellbare Zielgeschwindigkeit einregelt. Wird über eine zugeordnete Systemsensorik ein vorausfahrendes Fahrzeug detektiert, so regelt das ACC-System eine, ebenfalls durch den Fahrer einstellbare Zeitlücke bzw. einen einstellbaren Abstand zum vorausfahrenden Fahrzeug ein. Bekannte ACC-Systeme sind darüber hinaus in der Lage, das Fahrzeug auch aktiv in den Stand zu bremsen, wenn dies die Erfassungssituation des vorausfahrenden Fahrzeugs erfordert.

Derartige Systeme sind beispielsweise aus den DE 101 05 749 A1, DE 100 06 682 A1, EP 1 867 853 A2 oder DE 100 52 816 A1 schon bekannt. Diese ACC-Systeme benötigen zwingend eine zugeordnete, aufwändig ausgeprägte Sensorik, die die Erfassung der Umgebungs- oder Umfeldsituation ermöglicht, da nur dann der Regelbetrieb erfolgen kann. Diese Sensorik ist für die komplexen Regelungsaufgaben eines ACC-Systems sicherlich erforderlich, um auch den Fahrer zu entlasten bzw. ihm zu assistieren. Für einfache Regelaufgaben jedoch, die insbesondere den Fahrer nach wie vor vollständig einbinden, ist ein solches ACC-System jedoch überbestimmt.

Der Erfindung liegt damit das Problem zugrunde, ein Kraftfahrzeug mit einem einfach konfigurierten, jedoch multifunktionalen Fahrerassistenzsystem anzugeben.

Zur Lösung dieses Problems ist erfindungsgemäß ein Kraftfahrzeug umfassend ein Fahrerassistenzsystem vorgesehen, mit dem nach seiner Aktivierung unterhalb einer Grenzgeschwindigkeit das Fahrzeug gemäß einer Verzögerungskennlinie sowohl bei Vorwärtsfahrt als auch bei Rückwärtsfahrt automatisch in den Stand bremsbar ist.

Das erfindungsgemäße Kraftfahrzeug umfasst ebenfalls ein Fahrerassistenzsystem, das nur unterhalb einer entweder werksseitig fest vorgegebenen oder vom Fahrer wählbaren Grenzgeschwindigkeit aktiviert werden kann, es also längsführend arbeitet. Diese Grenzgeschwindigkeit liegt weit unter der maximalen, motorisierungsabhängigen Maximalgeschwindigkeit. Sie beträgt beispielsweise 60 km/h, vorzugsweise 50 km/h, insbesondere nur 40 km/h. Die Grenzgeschwindigkeit ist also sehr niedrig. Dies deshalb, da das Fahrerassistenzsystem beim erfindungsgemäßen Kraftfahrzeug ohne jedwedes Signal irgendeines Umfeldsensors arbeitet. Vielmehr ist das Fahrerassistenzsystem, wenn es unterhalb der Grenzgeschwindigkeit aktiviert ist, also durch eine fahrerseitig gegebene Aktivierungsinformation im Arbeits- bzw. Regelmodus geschaltet ist, worauf nachfolgend noch eingegangen wird, in der Lage, das Fahrzeug automatisch gemäß einer Verzögerungskennlinie in den Stand zu bremsen, und zwar sowohl bei einer Vorwärtsfahrt als auch bei einer Rückwärtsfahrt. Der Fahrer ist beim erfindungsgemäßen Kraftfahrzeug gezwungen, das Aktivierungssignal, das den Längsführungsbetrieb aktiviert und den automatischen Verzögerungsvorgang initiiert, so rechtzeitig zu geben, dass das Fahrzeug auch rechtzeitig vor einem entweder davor oder dahinter befindlichen Hindernis zum Stand kommt. Dies bedarf nur einer kurzen Anlernzeit für den Fahrer, da das Fahrzeug hierüber ja nur unterhalb der sehr geringen Grenzgeschwindigkeit überhaupt über das Fahrerassistenzsystem verzögert werden und in den Stand gebremst werden kann, sodass der Fahrer nach wenigen Versuchen weiß, wie sich das Fahrzeug verhält und wie lange der Verzögerungsweg ist, bezogen auf die Geschwindigkeit, bei der er das Aktivierungssignal für den automatischen Verzögerungsbetrieb gibt.

Diese Funktion steht dem Fahrer sowohl bei einer Vorwärtsfahrt als auch bei einer Rückwärtsfahrt zu. Insbesondere die Unterstützung durch das Fahrerassistenzsystem bei einer Rückwärtsfahrt ist besonders vorteilhaft, als der Fahrer sie beim Einparken nutzen kann.

Das System selbst ist durch den Fahrer jederzeit abschaltbar, auch wenn er die Grenzgeschwindigkeit unterschritten hat und das Assistenzsystem grundsätzlich betriebsbereit ist.

Die Verzögerungskennlinie, die das Assistenzsystem zur Verzögerung heranzieht, kann entweder fest vorgegeben sein, das heißt, dass die Kennlinie bei jeder gegebenen Geschwindigkeit, zu der das Aktivierungssignal vom Fahrer gegeben wird (so lange diese natürlich unterhalb der Grenzgeschwindigkeit liegt) immer dieselbe ist. Denkbar ist es aber auch, die Kennlinie in Abhängigkeit des Bedienverhaltens eines Fahrpedals aus einer Kennlinienschar zu wählen. Über dieses Fahrpedal kann zum einen vom Fahrer das Aktivierungssignal gegeben werden, das grundsätzlich den automatischen Verzögerungsbetrieb initiiert, sofern die Ist-Geschwindigkeit kleiner als die Grenzgeschwindigkeit ist. Wird das Fahrpedal, also das Gaspedal, entweder hinreichend schnell entlastet, ist also ein ausreichender Lösegradient gegeben, oder erreicht das Fahrpedal einen bestimmten Stellungsabsolutwert, ist also das Fahrpedal entweder nicht oder nur gering gedrückt, so wird das Aktivierungssignal gegeben. Abhängig davon kann dann aber auch die Verzögerungskennlinie gewählt werden. Entlastet der Fahrer das Fahrpedal sehr schnell, geht er also quasi ruckartig vom Gaspedal, so legt dies nahe, dass eine etwas stärkere Verzögerung gewünscht wird, als wenn er das Fahrpedal langsam entlastet. Hierüber kann also dann eine entsprechende Verzögerungskennlinie ausgewählt werden. Beispielsweise stehen innerhalb der Kennlinienschar drei Kennlinien zur Verfügung, eine die eine langsame, komfortable Verzögerung definiert, eine die eine etwas zügigere Verzögerung definiert und eine die eine relativ abrupte, dynamische Verzögerung definiert.

In Weiterbildung der Erfindung ist es auch vorteilhaft, die Kennlinien in Abhängigkeit der Ist-Geschwindigkeit zu wählen. Das heißt, dass je nachdem, bei welcher Ist-Geschwindigkeit, die wie beschrieben zwangsläufig kleiner der Grenzgeschwindigkeit sein muss, das Aktivierungssignal gegeben wird, eine geschwindigkeitsbezogene Kennlinie gewählt wird. Wird beispielsweise das Aktivierungssignal bei einer Geschwindigkeit, die näherungsweise gleich der Grenzgeschwindigkeit ist, gegeben, so wird beispielsweise eine Verzögerungskennlinie gewählt, die zu Beginn eine etwas stärkere Verzögerung definiert und zum Ende hin sanft in den Stand bremst. Beträgt die Ist-Geschwindigkeit beispielsweise nur die Hälfte der Grenzgeschwindigkeit, so kann eine etwas "flachere" Kennlinie gewählt werden, die im Wesentlichen homogen bzw. linear in den Stand bremst.

In Weiterbildung der Erfindung kann die fahrerseitige Betätigung eines Bremspedals trotz aktiviertem und arbeitendem Fahrerassistenzsystem priorisiert sein. Gemäß dieser Erfindungsausgestaltung hat der Fahrer stets die Längsführungshoheit, das heißt, dass er durch Betätigung des Bremspedals stets das gerade arbeitende Fahrerassistenzsystem übersteuern kann. Die Fahrerhandlung ist stets priorisiert.

Hat der Fahrer während aktivem und arbeitendem Fahrerassistenzsystem das Bremspedal kurz betätigt und löst er das Bremspedal wieder, so kann in Weiterbildung der Erfindung das Fahrerassistenzsystem automatisch wiederum den weiteren Verzögerungsbetrieb übernehmen. Das heißt, dass das Fahrerassistenzsystem das Fahrzeug wieder verzögert, letztlich also die Verzögerungskennlinie, die es bereits zuvor abgearbeitet hat, erneut aufgreift und abarbeitet. Denkbar ist es aber auch, nachdem die Ist-Geschwindigkeit durch die Betätigung des Bremspedals vom Fahrer aktiv reduziert wurde, eine etwas andere Kennlinie zu wählen, wenn eine Kennlinienauswahl in Abhängigkeit der Ist-Geschwindigkeit bei dem erfindungsgemäßen Kraftfahrzeug vorgesehen ist.

Eine Weiterbildung der Erfindung sieht vor, dass das Fahrerassistenzsystem ein vorzugsweise nach Art eines Hebels ausgebildetes Bedienelement umfasst, über das die Längsführung des Fahrzeugs steuerbar ist, worüber das Fahrzeug maximal auf die Grenzgeschwindigkeit beschleunigbar ist und bei Lösen des Bedienelements das Fahrerassistenzsystem automatisch den Kennlinien gesteuerten Verzögerungsbetrieb übernimmt. Gemäß dieser Erfindungsausgestaltung ist also eine manuelle Bedienung des Fahrerassistenzsystems möglich, sodass der Fahrer nicht gezwungen ist, immer das Fahrpedal zur Auslösung respektive Gabe des Aktivierungssignals zu nutzen. Die Bedienung des Fahrerassistenzsystem über das Fahrpedal ist allerdings höher priorisiert als die manuelle Bedienung über das Bedienelement. Bei betriebsbereitem Fahrerassistenzsystem kann folglich der Fahrer das Fahrzeug durch Betätigen des Hebels beschleunigen, sofern die Ist-Geschwindigkeit unterhalb der Grenzgeschwindigkeit ist. Die Beschleunigung ist jedoch bis auf maximal die Grenzgeschwindigkeit möglich. Löst der Fahrer nun das Bedienelement, so greift das Fahrerassistenzsystem und übernimmt die Längsführung, indem es vom bisherigen Beschleunigungs-Modus in den Verzögerungs-Modus übergeht und das Fahrzeug wiederum automatisch kennliniengesteuert verzögert. Dieser Wechsel in den Verzögerungsmodus ist aber nicht nur bei Lösen des Bedienelements möglich, sondern alternativ auch dann, wenn das Bedienelement in entgegengesetzte Richtung bewegt wird. Diese Richtungsänderung ist dann das Signal des Fahrerassistenzsystems, nun den Verzögerungsbetrieb zu übernehmen.

Das Fahrerassistenzsystem selbst kann so lange aktiviert bleiben, solange die Ist-Geschwindigkeit zwischen 0 km/h und der Grenzgeschwindigkeit liegt. Beschleunigt der Fahrer durch Drücken des Fahrpedals über die Grenzgeschwindigkeit, so wird das Fahrerassistenzsystem automatisch deaktiviert. Der Fahrer ist gezwungen, es wieder aktiv betriebsbereit zu schalten, wenn er die Grenzgeschwindigkeit wieder erreicht bzw. unterschreitet. Das heißt, dass sich das Assistenzsystem also automatisch oberhalb der Grenzgeschwindigkeit ausschaltet.

Wenngleich zuvor beschrieben wurde, dass die Auswahl einer Verzögerungskennlinie aus einer Kennlinienschar automatisch in Abhängigkeit bestimmter Randbedingungen möglich ist, ist es selbstverständlich auch denkbar, dass der Fahrer selbst die gewünschte Verzögerungskennlinie auswählt. Er hat hierzu beispielsweise die Wahl zwischen einer "komfortablen" und einer "dynamischen" Kennlinie, die er dem Verzögerungsbetrieb zugrunde legen kann.

Im Stillstand verfügt das Fahrerassistenzsystem über ein Stillstandsmanagement, das heißt, dass das hydraulische Halten im Stillstand sichergestellt wird, zum Beispiel auch bei starken Steigungen oder mit Anhängerlast. Die Fahreranwesenheit wird hierbei überwacht und gegebenenfalls auch ein sicherer Zustand hergestellt, beispielsweise durch Ansteuerung der Parkbremse oder Ansteuerung der P-Getriebestufe. Auch kann das ungültige Einlegen eines Ganges (z. B. Schalten in N) während der Fahrt generell zu einer Abschaltung des Fahrerassistenzsystems führen, wobei jedoch aus Sicherheitsgründen eine zuvor begonnene automatische Verzögerung über das Fahrerassistenzsystem zu Ende geführt wird, sollte sich das Fahrerassistenzsystem zum Zeitpunkt der Abschaltung gerade im Verzögerungsmodus befinden. Der jeweilige Betriebszustand des Fahrerassistenzsystems, also ob grundsätzlich betriebsbereit oder aktiviert arbeitend, kann dem Fahrer an einem geeigneten Anzeigeinstrument visualisiert werden.

Weiterhin besteht die Möglichkeit, unterschiedliche Verzögerungskennlinien während eines Verzögerungsbetriebs bei Vorwärtsfahrt und bei Rückwärtsfahrt zugrunde zu legen. Bei einer Rückwärtsfahrt, in der Regel während eines Einparkvorgangs, kann es häufig erforderlich sein, dass das Fahrzeug aufgrund der Enge der Parklücke und Ähnlichem etwas schneller in den Stand zu bremsen ist, als bei einer Vorwärtsfahrt. Das heißt, dass in diesem Fall eine Verzögerungskennlinie gewählt werden kann, die einen sehr schnellen Bremseneinstieg umsetzt, sobald der Fahrer das Fahrpedal entweder ganz losgelassen hat oder hinreichend schnell losgelassen hat, sodass ein deutlicher Lösegradient gegeben ist. Hierdurch unterstützt das Fahrerassistenzsystem den Fahrer bei kritischen Rangiersituationen, in denen ein schneller Wechsel vom Gaspedal auf das Bremspedal nötig ist, bereits bevor der Fahrer das Bremspedal betätigt hat, mithin also schon während der Pedalwechselphase. Da der Fahrer nachfolgend bei Betätigung des Bremspedals die automatische Assistenzsystemverzögerung stets übersteuern kann, hat er auch beim Einparken stets die Bedienhoheit, wie ihn aber gleichwohl das Fahrerassistenzsystem bereits mit Eingang des Aktivierungssignals (also hinreichend schnellem Pedallösen) durch automatische Verzögerung unterstützt.

Weitere Vorteile, Merkmale und Einzelheiten der Erfindung ergeben sich aus dem im Folgenden beschriebenen Ausführungsbeispiel sowie anhand der Zeichnung.

Die beigefügte Figur zeigt in Form einer Prinzipdarstellung ein erfindungsgemäßes Kraftfahrzeug 1, umfassend ein Fahrpedal 2 und ein Bremspedal 3, die im gezeigten Beispiel mit einem Fahrzeugbus 4 in Verbindung stehen, sodass entsprechende Bedieninformationen zu diesen Pedalen erfasst und an eine Steuerungseinrichtung 5 übertragen werden können. Die Steuerungseinrichtung 5 empfängt ferner Informationen einer Geschwindigkeitserfassung 6, sodass kontinuierlich die Ist-Geschwindigkeit des Kraftfahrzeugs 1 seitens der Steuerungseinrichtung 5 bekannt ist.

Mit der Steuerungseinrichtung 5 ist ferner ein Bedienelement 7 in Form eines vom Fahrer manuell verschwenkbaren Bedienhebels verbunden. Das Steuergerät 5 sowie das Bedienelement 7 sind Teil eines Fahrerassistenzsystems 8, das der Längsführung des Kraftfahrzeugs 1 sowohl bei Vorwärts- als auch bei Rückwärtsfahrt dient und über das das Kraftfahrzeug 1 gemäß einer vorgegebenen Verzögerungskennlinie sowohl bei Vorwärtsfahrt als auch bei Rückwärtsfahrt automatisch in den Stand bremsbar ist, ohne dass der Fahrer hierfür eingreifen muss und ohne dass auch nur ein einziges Signal eines Umfeldsensors seitens der Steuerungseinrichtung 5 berücksichtigt wird. Das Fahrerassistenzsystem 8 arbeitet also quasi als in sich geschlossenes System ohne Informationen über irgendwelche Umgebungsmerkmale wie Hindernisabstände, Geschwindigkeiten anderer Fahrzeuge oder Ähnlichem.

Das Fahrerassistenzsystem, das über einen Schalter 9 grundsätzlich an- und ausgeschaltet werden kann, kann nur unterhalb einer Grenzgeschwindigkeit v_{g} aktiviert werden bzw. arbeiten, wenn die hierfür erforderlichen Randbedingungen gegeben sind. Diese Grenzgeschwindigkeit beträgt beispielsweise maximal 40 km/h. Sie kann entweder werkseitig fest implementiert sein, oder vom Fahrer festlegbar sein, wobei auch hier eine maximale Obergrenze für eine vom Fahrer festlegbare Grenzgeschwindigkeit gegeben ist. In jedem Fall liegt die Grenzgeschwindigkeit deutlich unterhalb der maximalen Fahrgeschwindigkeit des Kraftfahrzeugs, die vom Antriebsaggregat, das hier nicht näher gezeigt ist, abhängig ist.

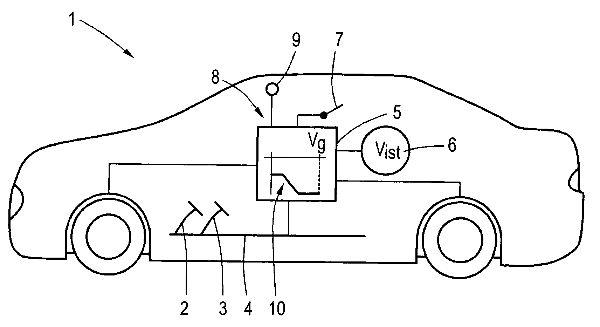

Hat der Fahrer über den An-Aus-Schalter 9 das Fahrerassistenzsystem 8 grundsätzlich in Betriebsbereitschaft gesetzt, und gibt die Ist-Geschwindigkeitserfassung 6 an, dass die Fahrzeug-Ist-Geschwindigkeit kleiner gleich der Grenzgeschwindigkeit v_{g} ist, so kann also das Fahrerassistenzsystem grundsätzlich seine Längsführungsaufgabe übernehmen. Es arbeitet dann bzw. geht dann in den Verzögerungsmodus über, wenn der Fahrer beispielsweise das Fahrpedal 2, das er zuvor zur Längsbeschleunigung des Fahrzeugs noch etwa gedrückt hat, schnell entlastet oder das Fahrpedal dabei eine erfasste Position einnimmt, also einen Absolutwert, der einen Fahrerassistenzsystembetrieb initiiert. Die Steuerungseinrichtung 5 legt sodann für ihren weiteren Steuerbetrieb eine Verzögerungskennlinie 10 zugrunde, die in Fig. 1 nur angedeutet ist. Gemäß dieser Verzögerungskennlinie (im Diagramm sei längs der Abszisse die Geschwindigkeit, längs der Ordinate die Verzögerung (also die Beschleunigung) aufgetragen) steuert die Steuerungseinrichtung 5 nun das Bremssystem, das nicht näher gezeigt ist, entsprechend an, sodass das Kraftfahrzeug 1, der Vorgabe der Verzögerungskennlinie 10 folgend, automatisch in den Stand gebremst wird. Auslösendes Moment hierfür ist allein die entsprechende Betätigung des Fahrpedals 2, woraufhin unmittelbar die Verzögerungskennlinie 19 "abgearbeitet" wird. Sobald das Fahrzeug in den Stillstand gebremst ist, wird es in diesem Zustand stabil gehalten, beispielsweise durch Einlegen der Parkbremse oder der P-Getriebestufe, wiederum gesteuert über die Steuerungseinrichtung 5.

Während des automatischen Verzögerungsbetriebes, der wie gesagt sowohl bei Vorwärts- als auch bei Rückwärtsfahrt erfolgen kann, kann der Fahrer durch aktives Beschleunigen über das Fahrpedal 2 oder durch aktives Bremsen über das Fahrpedal 3 stets die Hoheit über die Fahrzeugführung wiedererlangen. Er ist also stets in der Lage, aufgrund der Priorisierung der Fahrpedal- bzw. Bremspedalbetätigungen die Längsführung wieder selbst zu übernehmen. In einem solchen Fall übernimmt jedoch das Fahrerassistenzsystem sofort wieder den Längsführungsbetrieb und setzt eine zuvor begonnene Verzögerung gemäß der eingeladenen Kennlinie 10 wieder fort, wenn beispielsweise das Bremspedal 3 nur kurzzeitig gedrückt und wieder entlastet wird. Unmittelbar damit einher geht wieder die Längsführung über das Fahrerassistenzsystem, das dann die Kennlinie 10 dort wieder weiter abarbeitet, wo es gemäß der nunmehr gegebenen Ist-Geschwindigkeit erforderlich ist.

Beschleunigt der Fahrer über das Fahrpedal 2, so kann es sein, dass er die Grenzgeschwindigkeit v_{g} überschreitet. In diesem Fall geht das Fahrerassistenzsystem 8 lediglich wieder in einen Stand-by-Zustand über, da die Voraussetzungen für seine Aktivierung respektive seinen aktiven Arbeitsbetrieb geschwindigkeitsmäßig nicht mehr gegeben sind. Erst wenn das Fahrzeug wieder langsamer wird uns die Ist-Geschwindigkeit kleiner als die Grenzgeschwindigkeit ist, kann das Fahrerassistenzsystem wiederum die Längsführung übernehmen, sofern die entsprechende auslösende Randbedingung (z. B. hinreichend schnelles Lösen des Fahrpedals) gegeben ist.

Gezeigt ist ferner das Bedienelement 7, über das der Fahrer selbst zusätzlich die Längsführung vornehmen kann. Durch Verschwenken des Bedienelements 7 kann der Fahrer beispielsweise das Fahrzeug beschleunigen. Dies ist jedoch nur möglich, solange die Ist-Geschwindigkeit vᵢₛₜ kleiner als die Grenzgeschwindigkeit v_{g} ist. Die Beschleunigung ist dann nur bis zur Grenzgeschwindigkeit v₉ möglich, das Fahrzeug verharrt dann bei dieser Geschwindigkeit, selbst wenn der Hebel noch weiter betätigt wird. Lässt der Fahrer das Bedienelement 7 jedoch los, so wird dies allgemein als Übernahmeaufforderung an das Fahrerassistenzsystem 8 verstanden, das sodann den automatischen Verzögerungsbetrieb gemäß der Kennlinie 10 übernimmt.

Die Verzögerungskennlinie 10 kann als solche fest vorgegeben sein. Denkbar ist es aber auch, dass die Verzögerungskennlinie aus einer Kennlinienschar gewählt wird, abhängig von der gegebenen Ist-Geschwindigkeit, bei welcher beispielsweise über das Fahrpedal 2 die Übernahmeaufforderung zur Aktivierung und Längsführung durch das Fahrerassistenzsystem 8 gegeben wird. Ist die Ist-Geschwindigkeit nahe der Grenzgeschwindigkeit, so kann eine etwas steilere Verzögerungskennlinie gewählt werden, um das Fahrzeug relativ rasch zunächst herunterzubremsen und sodann sanft und sachte in den Stillstand zu bremsen, verglichen mit einer Ist-Geschwindigkeit, die beispielsweise nur der Hälfte der Grenzgeschwindigkeit entspricht. In diesem Fall würde sogleich mit einer relativ flachen Verzögerungskennlinie gearbeitet. Dies ist jedoch lediglich beispielhaft.

Auch besteht die Möglichkeit, dass die abzuarbeitende Verzögerungskennlinie seitens des Fahrer wählbar ist, das heißt, dass er durch entsprechende Auswahl der Kennlinie das Verzögerungsverhalten wählt. Er kann zwischen einem komfortablen Verzögerungsverhalten, bei dem relativ langsam abgebremst wird, und einem dynamischen Verzögerungsverhalten, bei dem relativ abrupt und heftig abgebremst wird, wählen.

Grundsätzlich bleibt das Fahrerassistenzsystem 8 so lange aktiviert, mithin also im Stand-by-Modus, wenn es einmal eingeschaltet ist, solange die Ist-Geschwindigkeit zwischen 0 km/h und der Grenzgeschwindigkeit liegt. Das heißt, dass nach einmaligem Einschalten über den An-Aus-Schalter 9 das Fahrerassistenzsystem immer dann aktiv ist, sobald die Geschwindigkeit im gegebenen Geschwindigkeitsintervall liegt. Kommt dann ein auslösendes Signal, wird sofort die Längsführung über das Fahrerassistenzsystem übernommen. Liegt die Ist-Geschwindigkeit außerhalb des Geschwindigkeitsintervalls, so geht das Fahrerassistenzsystem in einen Stand-by-Modus über, kann also, selbst wenn der Fahrer das Fahrpedal sehr rasch entlastet, nicht die Längsführung übernehmen. Dies ist erst wieder möglich, wenn die Geschwindigkeit hinreichend abfällt und das Fahrpedal in der auslösenden Weise entsprechend entlastet wird.

## Patentansprüche

1. Kraftfahrzeug umfassend ein Fahrerassistenzsystem (8), mit dem nach seiner Aktivierung unterhalb einer Grenzgeschwindigkeit das Fahrzeug (1) gemäß einer Verzögerungskennlinie (10), welche in Abhängigkeit des Bedienverhaltens eines Fahrpedals (2) aus einer Kennlinienschar gewählt wird, sowohl bei Vorwärtsfahrt als auch bei Rückwärtsfahrt automatisch in den Stand bremsbar ist, **dadurch gekennzeichnet, dass** die automatische Bremsung anhand des Bedienverhaltens des Fahrpedals (2) initiierbar ist.

2. Kraftfahrzeug nach Anspruch 1,
**dadurch gekennzeichnet,**
**dass** die Kennlinie (10) in Abhängigkeit der Ist-Geschwindigkeit gewählt wird.

3. Kraftfahrzeug nach Anspruch 1 oder 2,
**dadurch gekennzeichnet,**
**dass** die fahrerseitige Betätigung eines Bremspedals (3) trotz aktiviertem und arbeitendem Fahrerassistenzsystem (8) priorisiert ist.

4. Kraftfahrzeug nach Anspruch 3,
**dadurch gekennzeichnet,**
**dass** bei Lösen des Bremspedals (3) automatisch das Fahrerassistenzsystem (8) den weiteren Verzögerungsbetrieb übernimmt.

5. Kraftfahrzeug nach einem der vorangehenden Ansprüche,
**dadurch gekennzeichnet,**
**dass** das Fahrerassistenzsystem (8) ein vorzugsweise nach Art eines Hebels ausgebildetes Bedienelement (7) umfasst, über das die Längsführung des Fahrzeugs (1) steuerbar ist, worüber das Fahrzeug (1) maximal auf die Grenzgeschwindigkeit beschleunigbar ist und bei Lösen des Bedienelements (7) oder Bewegen des Bedienelements (7) in entgegengesetzte Richtung das Fahrerassistenzsystem (8) automatisch den kennliniengesteuerten Verzögerungsbetrieb übernimmt.

6. Kraftfahrzeug nach einem der vorangehenden Ansprüche,
**dadurch gekennzeichnet,**
**dass** das Fahrerassistenzsystem (8) solange aktiviert bleibt, solange die Ist-Geschwindigkeit zwischen 0 km/h und der Grenzgeschwindigkeit liegt.

7. Kraftfahrzeug nach einem der vorangehenden Ansprüche,
**dadurch gekennzeichnet,**
**dass** das Verzögerungsverhalten fahrerseitig wählbar ist.

8. Kraftfahrzeug nach einem der vorangehenden Ansprüche
**dadurch gekennzeichnet,**
**dass** bei einer Verzögerung während einer Vorwärtsfahrt eine andere Verzögerungskennlinie verwendet ist als bei einer Verzögerung während einer Rückwärtsfahrt.

## Claims

1. Motor vehicle comprising a driver assistance system (8), with which, after its activation below a speed limit, the vehicle (1) is able to be braked automatically to a standstill both when driving forward and reversing according to a deceleration characteristic curve (10) which is selected from a plurality of characteristic curves depending on the operating behaviour of an accelerator pedal (2), **characterised in that** the automatic braking is able to be initiated on the basis of the operating behaviour of the accelerator pedal (2).

2. Motor vehicle according to claim 1, **characterised in that** the characteristic curve (10) is selected depending on the actual speed.

3. Motor vehicle according to claim 1 or 2, **characterised in that** the actuation of a brake pedal (3) on the part of the driver is prioritised despite an activated and working driver assistance system (8).

4. Motor vehicle according to claim 3, **characterised in that** the driver assistance system (8) automatically assumes the further deceleration operation when the brake pedal (3) is released.

5. Motor vehicle according to one of the preceding claims, **characterised in that** the driver assistance system (8) comprises an operating element (7) preferably formed in the manner of a lever, via which the longitudinal guidance of the vehicle (1) is able to be controlled, via which the vehicle (1) is able to be accelerated at a maximum to the speed limit, and the driver assistance system (8) automatically assumes the deceleration operation controlled by the characteristic curve when the operating element (7) is released or the operating element (7) is moved in the opposite direction.

6. Motor vehicle according to one of the preceding claims, **characterised in that** the driver assistance system (8) remains activated as long as the actual speed lies between 0km/h and the speed limit.

7. Motor vehicle according to one of the preceding claims, **characterised in that** the deceleration behaviour is able to be selected on the part of the driver.

8. Motor vehicle according to one of the preceding claims, **characterised in that** a different deceleration characteristic curve is used in the case of deceleration when driving forward than in the case of deceleration when reversing.

## Revendications

1. Véhicule automobile comprenant un système (8) d'assistance au conducteur, avec lequel, après son activation en dessous d'une vitesse limite, le véhicule (1) peut être freiné automatiquement jusqu'à l'arrêt, aussi bien en marche avant qu'en marche arrière, selon une courbe caractéristique de décélération (10) qui est choisie parmi un ensemble de courbes caractéristiques en fonction du comportement de commande d'une pédale d'accélérateur (2), **caractérisé en ce que** le freinage automatique peut être déclenché à l'aide du comportement de commande de la pédale d'accélérateur (2).

2. Véhicule automobile selon la revendication 1, **caractérisé en ce que** la courbe caractéristique (10) est choisie en fonction de la vitesse réelle.

3. Véhicule automobile selon la revendication 1 ou 2, **caractérisé en ce que** l'actionnement, par le conducteur, d'une pédale de frein (3) malgré le fait que le système (8) d'assistance au conducteur est activé et travaille est prioritaire.

4. Véhicule automobile selon la revendication 3, **caractérisé en ce que**, lors du relâchement de la pédale de frein (3), le système (8) d'assistance au conducteur prend automatiquement en charge la poursuite de la fonction de décélération.

5. Véhicule automobile selon l'une des revendications précédentes, **caractérisé en ce que** le système (8) d'assistance au conducteur comprend un élément de commande (7) qui est conçu de préférence comme un levier et par l'intermédiaire duquel le guidage longitudinal du véhicule (1) peut être commandé, le véhicule (1) pouvant alors être accéléré au maximum jusqu'à la vitesse limite et, lors du relâchement de l'élément de commande (7) ou lors du déplacement de l'élément de commande (7) dans la direction opposée, le système (8) d'assistance au conducteur prenant automatiquement en charge la fonction de décélération commandée par la courbe caractéristique.

6. Véhicule automobile selon l'une des revendications précédentes, **caractérisé en ce que** le système (8) d'assistance au conducteur reste activé tant que la vitesse réelle est comprise entre 0 km/h et la vitesse limite.

7. Véhicule automobile selon l'une des revendications précédentes, **caractérisé en ce que** le comportement de décélération peut être choisi par le conducteur.

8. Véhicule automobile selon l'une des revendications précédentes, **caractérisé en ce que**, dans le cas d'une décélération pendant une marche en avant, on utilise une autre courbe caractéristique de décélération que dans le cas d'une décélération pendant une marche en arrière.
